# EUROPEAN PATENT APPLICATION

(11) **EP 4 628 420 A1**
(43) Date of publication of application: **08.10.2025**
(21) Application number: 24184134.5
(22) Date of filing: 24.06.2024
(51) Int. Cl.: B65D 35/10, B65D 35/14, B65D 65/46

(54) **ECO-FRIENDLY SOFT TUBE PACKAGING AND METHOD OF MANUFACTURING THE SAME**

(30) Priority: 02.04.2024 TW 113112483
(71) Applicant: Hsu, Yu-Ting, Taipei (TW)
(72) Inventor: Hsu, Yu-Ting, Taipei (TW)
(74) Representative: Cabinet Chaillot

(57) **Abstract**

An eco-friendly soft tube packaging and a method of manufacturing the same are provided. The soft tube packaging includes a cap (10), a body (20), a tightening member (30), and an outer tube (40), all made from biodegradable or recyclable materials. A bottle preform (M) is produced by injection molding and further produced into the body (20) with a hollow liner (22) by blow molding. The outer tube (40) is a spiral paper tube produced by at least two payers of fiber paper. The outer tube (40) is covering the liner (22) and fixed to the body (20) by the tightening member (30). A rear end of the outer tube (40) and a rear end of the liner (22) are adhered and the liner (22) is closed. The respective components of the soft tube packaging can be broken down and detached for sorting and recycling separately. Therefore, fully recyclable or biodegradable tube packaging can be achieved.

## Description

### FIELD OF THE INVENTION

The present invention relates to a fully recyclable and biodegradable container, especially to an eco-friendly soft tube packaging and a method of manufacturing the same.

### BACKGROUND OF THE INVENTION

The soft tubes are lightweight, easy to squeeze, and convenient to use. Beside the most popular toothpaste tube, the soft tubes are also applied to mount other substances including engine lubricant, oils, adhesives, face wash, etc., which are pervasive in our daily lives. According to reports, there are hundreds of millions of empty toothpaste tube or other soft tubes are thrown out and buried. Most of the conventional soft tubes are produced by multiple layers of plastic, polymer, and resin mixed. For example, the soft tubes made of polyethylene (PE), or polypropylene (PP) are unable to be recycled and reused. These plastic takes a hundred years or more to break down completely.

Refer to US Pat No. 5257865, a mouth structure for a flexible bag is provided. The mouth structure includes a mouth body capable of being snapped on to a rim of an opening end of a flexible bag for easy pouring out the contents of the flexible bag through the mouth body. The mouth structure comprises a mouth body to be fitted on the opening end of the flexible bag, and a mouth body fastening member for fastening the mouth body to the rim of the flexible bg. A spout is provided on an upper wall of the mouth body. The mouth structure is detachably attached to the opening end of the flexible bag. However, the above mouth structure for the flexible bag has complicated structure with poor fastening effect. The fastening member is easy to break or damage, and unable to be recycled.

In practice, in order to solve environmental pollution caused by the conventional toothpaste tubes and comply with increasingly stringent environmental regulations and industry standards, the following requirements should be met. By priority, the first is that all components can be recycled and reused. The second is using bio-based materials to produce the products. The third is the products should be bio-decomposable or bio-degradable.

In order to solve environmental pollution caused by the conventional toothpaste tubes, inventors of the present invention provide a soft paper tube (refer to Taiwanese Pat. No. I808436). The soft paper tube includes a cap, a front tube portion, a rear tube portion, and a fastening ring. The soft paper tube is completely made from eco-friendly materials for replacement of conventional soft tubes made of plastic or aluminum. The cap, the front tube portion, and the fastening ring are made of materials capable of being broken down naturally, mainly bamboo powder. The cap is connected with a tube of the front tube portion and the rear tube portion is produced by waterproof paper and connected to the front tube portion by a top end thereof. The front tube portion and the cap work together to seal the top end of the rear tube portion to form an integrated and sealed soft paper tube.

Although the respective components of the soft paper tube provided in the Taiwanese Pat. No. I808436 are made from materials capable of being broken down naturally, the cap, the fastening ring, and the paper tube are made of different materials and not easy to detach for recycling separately. Thus such paper tube is biodegradable yet unable to be recycled. There is room for improvement and there is a need to provide a novel tube in order to solve the above problem.

### SUMMARY

Therefore, it is a primary object of the present invention to provide an eco-friendly soft tube packaging which is fully recyclable and biodegradable.

An eco-friendly soft tube packaging according to the present invention includes a body made from biodegradable or recyclable materials by blow molding, a cap made from biodegradable or recyclable materials, a tightening member made from biodegradable or recyclable materials, and an outer tube which is a spiral paper tube produced by waterproof paper being wound spirally. The body consists of a bottle mouth, a liner, and a joining recess. The liner is provided with a hollow cavity and connected to a lower part of the bottle mouth while the joining recess is disposed around a periphery of the body and located between the bottle mouth and the liner. The bottle mouth is a tubular component communicating with an inner space of the liner. One end of the bottle mouth is provided with a hole communicating with the inner space of the liner. The cap is detachably connected to the bottle mouth to close or open the bottle mouth. The tightening member is having the same shape as the joining recess and able to be mounted into the joining recess. The outer tube covers the liner and the joining recess and a head portion of the outer tube is fixed in the joining recess of the body by tightening of the tightening member. A rear end of the outer tube and a rear end of the liner are adhered to each other and the liner is closed.

Preferably, the tightening member is in a circular form composed of a first tightening unit and a second tightening unit.

Preferably, the spiral paper tube is produced by at least two layers of fiber paper and an inner surface of the spiral paper tube is provided with a waterproof layer.

Preferably, long fibers of the two layers of the fiber paper extend and intersect each other.

It is another object of the present invention to provide a method of manufacturing an eco-friendly soft tube packaging which includes the following steps. First producing a cap by biodegradable or recyclable materials. Then producing a tightening member using biodegradable or recyclable materials. Later producing a bottle preform including a bottle mouth, a lower segment, and a joining recess by injection molding of biodegradable or recyclable materials. The lower segment is connected to a lower part of the bottle mouth and the joining recess is located between the bottle mouth and the lower segment and disposed on a periphery of the bottle preform. The bottle mouth is a tubular part with a hole at one end thereof. Next heating the lower segment of the bottle preform. Then producing a liner by blow molding of the lower segment of the bottle preform and the bottle mouth communicating with an inner space of the liner. Using a spiral paper tube to cover the liner and the joining recess and using a tightening member to tighten a head portion of the spiral paper tube to the joining recess of the bottle preform. Later cutting a bottom of the liner so that an opening is formed on a bottom end of the liner and communicating with an inner space of the liner. Then adhering an outer surface of the liner close to the bottom end of the liner to an inner surface of the spiral paper tube. Lastly closing a bottom end of the spiral paper tube and the opening of the liner at the same time after filling materials into the liner through the opening on the bottom end of the liner.

Preferably, the biodegradable or recyclable material is formed by bamboo powder mixed with plastic capable of being broken down naturally.

Preferably, the plastic capable of being broken down naturally includes polyvinyl alcohol (PVA) and polylactic acid (PLA).

Preferably, the plastic capable of being broken down naturally includes starch-based blends, polybutylene adipate terephthalate (PBAT), poly(butylene succinate (PBS), and polyhydroxyalkanoates (PHAs).

Preferably, the tightening member together with an upper edge of the spiral paper tube is adhered to the joining recess by adhesives, hot-pressing, high frequency welding, or ultrasonic welding.

Preferably, an outer surface of the liner close to the bottom end of the liner is adhered to an inner surface of the spiral paper tube by hot-pressing, high frequency welding, or ultrasonic welding.

Preferably, the bottom end of the spiral paper tube and the opening of the liner are closed by hot-pressing, high frequency welding, or ultrasonic welding at the same time.

The eco-friendly soft tube packaging features on that the respective components including the cap, the body, the tightening member, and the outer tube are produced by biodegradable or recyclable materials. The respective components can be broken down or detached for sorting and recycling separately. Therefore, fully recyclable or biodegradable tube packaging can be achieved.

As to technical features and functions of the present invention, please refer to the following embodiments and related figures.

### BRIEF DESCRIPTION OF THE DRAWINGS

Fig. 1 is an exploded view of an embodiment according to the present invention;
Fig. 2 is a perspective view of the assembled embodiment shown in Fig. 1 according to the present invention;
Fig. 3 shows partial sectional views of an embodiment according to the present invention;
Fig. 4 and Fig. 5 are schematic drawings showing steps of a manufacturing process of an embodiment according to the present invention.

### DETAILED DESCRIPTION

In the following descriptions and figures of embodiments according to the present invention, directions mentioned (such as upper, lower, left, right, front and rear) are defined according to related figures and used for showing structure or relationship (such as positions, connections, and actions) among respective components. In principle, the directions described are proper when positions of the components or the structure mentioned in the specifications matches those in figures. Once the positions of the components or the structure mentioned in the specifications change, the directions described should have corresponding changes.

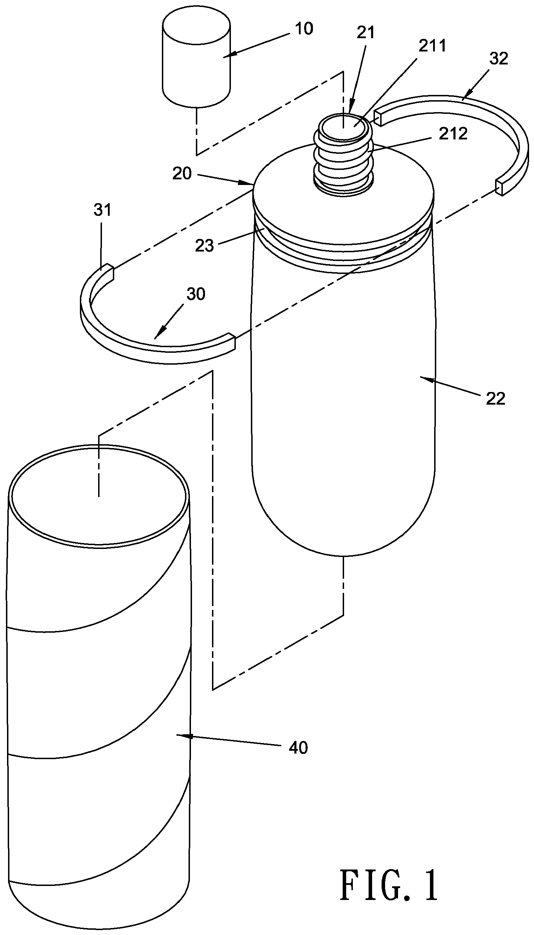

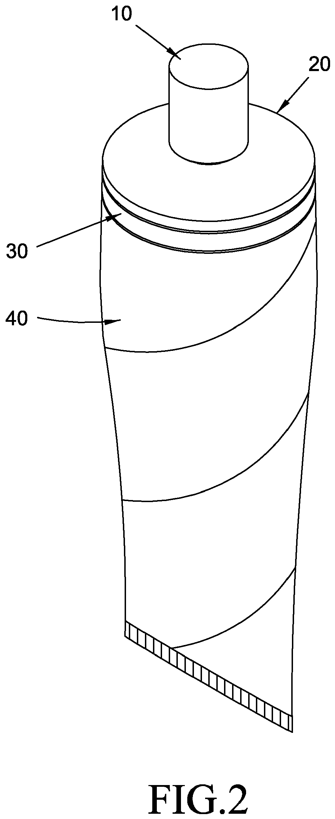

Refer to Fig. 1 and Fig. 2, an eco-friendly soft tube packaging according to the present invention can be used to mount various substances or goods including but not limited to toothpaste, engine lubricant, oils, adhesives, face wash, etc.

In a preferred embodiment, an eco-friendly soft tube packaging according to the present invention includes a cap 10, a body 20, a tightening member 30, and an outer tube 40. The cap 10, the body 20, and the tightening member 30 are made from biodegradable or recyclable materials by injection molding or blow molding. In a preferred embodiment, the biodegradable or recyclable material is formed by bamboo powder mixed with plastic capable of being broken down naturally. The plastic capable of being broken down naturally includes polyvinyl alcohol (PVA) and polylactic acid (PLA). In another preferred embodiment, the plastic capable of being broken down naturally includes starch-based blends, polybutylene adipate terephthalate (PBAT), poly(butylene succinate (PBS), and polyhydroxyalkanoates (PHAs).

The body 20 consists of a bottle mouth 21, a liner 22, and a joining recess 23. The liner 22 is provided with a hollow cavity. In a preferred embodiment, the liner 22 is produced by blow molding and having a small wall thickness. The liner 22 is connected to a lower part of the bottle mouth 21 and the joining recess 23 is disposed around a periphery of the body 20 and located between the bottle mouth 21 and the liner 22. The bottle mouth 21 is a tubular component communicating with an inner space of the liner 22. One end of the bottle mouth 21 is provided with a hole 211 communicating with the inner space of the liner 22 so that materials stored in the liner 22 can be discharged or extruded through the hole 211 of the bottle mouth 21.

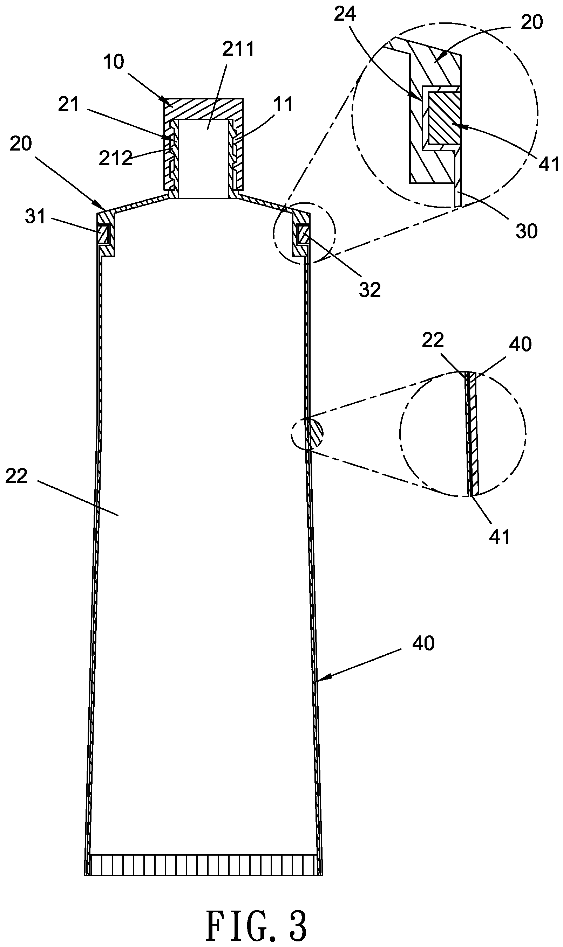

The cap 10 is cup-shaped and made from biodegradable or recyclable materials. The cap 10 is detachably mounted to the bottle mouth 21 to close or open the bottle mouth 21. In a preferred embodiment, an outer surface of the bottle mouth 21 is provided with a second thread 212 and an inner surface of the cap 10 is provided with a first thread 11 (as shown in Fig. 3). The cap 10 is connected with the bottle mouth 21 by the first thread 11 engaged with the second thread 212 for closing or opening the hole 211 of the bottle mouth 21.

The tightening member 30 is able to be mounted into the joining recess 23 and having the same shape as the joining recess 23. In a preferred embodiment, the tightening member 30 can be in a circular form formed by combination of a first tightening unit 31 with a second tightening unit 32.

In a preferred embodiment, the outer tube 40 is a spiral paper tube produced by waterproof paper being wound spirally. The outer tube 40 covers the liner 22 and the joining recess 23. A head portion of the outer tube 40 is fixed in the joining recess 23 of the body 20 by tightening of the tightening member 30. Not only a rear end of the outer tube 40 is adhered and connected to a rear end of the liner 22, the liner 22 is also closed by one of the following ways including hot-pressing, high frequency welding, and ultrasonic welding.

In a preferred embodiment, the head portion of the outer tube 40 is connected to the joining recess 23 by adhesive (using biodegradable adhesives). In other preferred embodiments, the tightening member 30 together with the head portion of the outer tube 40 (an upper edge of the spiral paper tube) is adhered to the joining recess 23 by hot-pressing, high frequency welding, or ultrasonic welding.

In a preferred embodiment, the spiral paper tube of the outer tube 40 is produced by at least two layers of fiber paper. An inner surface of the spiral paper tube is provided with a waterproof layer 41 (as shown in Fig. 3) made of biodegradable polylactic acid (PLA) film having ductility and malleability, certain flexibility, and excellent heat sealing performance. The liner 22 of the present eco-friendly soft tube packaging is used for providing excellent air-tightness and waterproof properties while mounting materials. In a preferred embodiment, long fibers of the two layers of the fiber paper which extend and intersect each other not only provide better structural strength but also offer resilience after the liner 22 and the outer tube 40 being pressed and deformed.

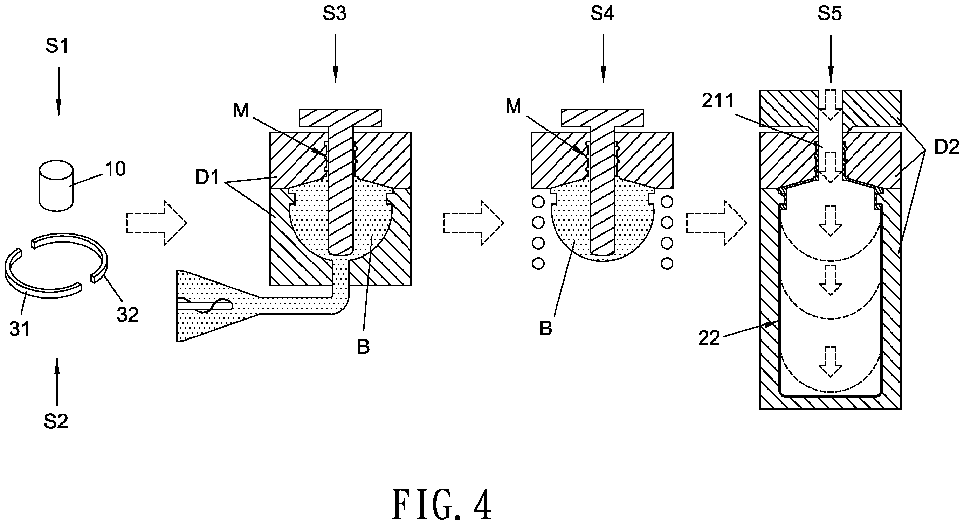

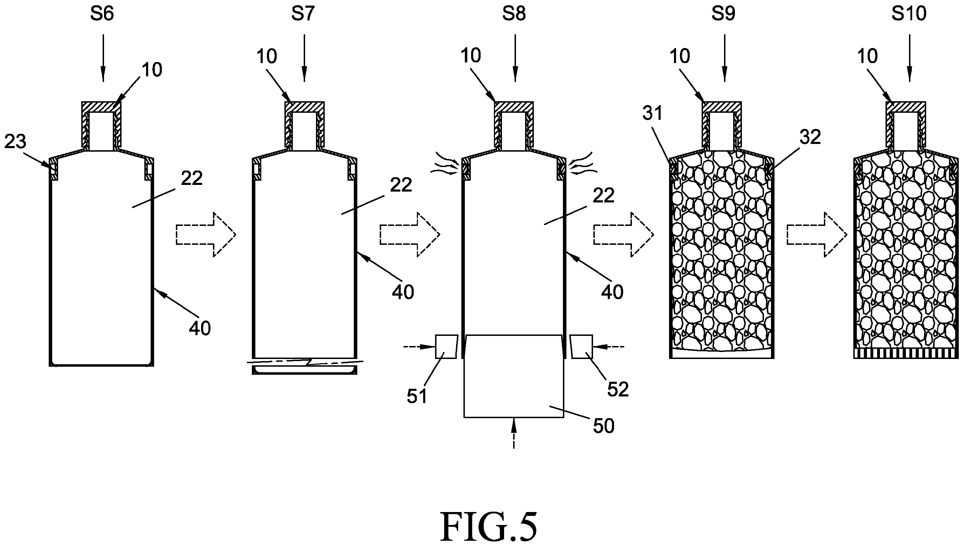

Refer to Fig. 4 and Fig. 5, a method of manufacturing an eco-friendly soft tube packaging according to the present invention includes the following steps.
S1: producing a cap 10 by biodegradable or recyclable materials; the cap 10 is preferably produced by injection molding;
S2: producing a tightening member 30 using biodegradable or recyclable materials; the tightening member 30 is preferably produced by injection molding;
S3: preparing a bottle preform M by biodegradable or recyclable materials; basically, the bottle preform M is a tubular plastic part produced in a first mold D1 by injection molding. The bottle preform M includes a bottle mouth 21, a lower segment B and a joining recess 23. The lower segment B is connected to a lower part of the bottle mouth 21 and the joining recess 23 is disposed on a periphery of the bottle preform M and located between the bottle mouth 21 and the lower segment B. The bottle mouth 21 is a tubular part with a hole 211 at one end thereof;
S4 heating the lower segment B of the bottle preform M; the lower segment B is preferably heated by oven bake heating or infrared heating;
S5: producing a liner 22 by blow molding of the lower segment B of the bottle preform M; in a preferred embodiment, the bottle preform M is clipped in a second mold D2 and compressed air is filled into the bottle preform M through the hole 211 to blow the lower segment B of the bottle preform M in the second mold D2 into the liner 22;
S6: using a spiral paper tube (an outer tube 40) to cover the liner 22 and the joining recess 23 (also refer to Fig. 1 and Fig. 2) and using a tightening member 30 to tighten a head portion of the spiral paper tube to the joining recess 23 of the bottle preform M; in a preferred embodiment, the tightening member 30 together with an upper edge of the spiral paper tube is adhered to the joining recess 23 by adhesives, hot-pressing, high frequency welding, or ultrasonic welding;
S7: cutting a bottom of the liner 22 so that an opening is formed on a bottom end of the liner 22 and communicating with an inner space of the liner 22;
S8: adhering an outer surface of the liner 22 close to the bottom end of the liner 22 to an inner surface of the spiral paper tube;
S9: filling materials into the liner 22 through the opening on the bottom end of the liner 22; and
S10: closing a bottom end of the spiral paper tube and the opening of the liner 22 at the same time to complete filling and packaging of the materials; in a preferred embodiment, the bottom end of the spiral paper tube and the opening of the liner 22 are closed simultaneously by hot-pressing, high frequency welding, or ultrasonic welding.

In the step S8, the outer surface of the liner 22 close to the bottom end of the liner 22 is adhered to the inner surface of the spiral paper tube by hot-pressing, high frequency welding, or ultrasonic welding to ensure the materials are filled into the liner 22 through the opening on the bottom end of the liner 22 during the filling.

Refer to Fig. 5, in the step S8 of a preferred embodiment, by collaborative operation of a first hot pressing block 50 and two second hot pressing blocks 51, 52, the liner 22 is adhered to the inner surface of the spiral paper tube. The first hot pressing block 50 is a trapezoidal body with a narrow upper part and a wide lower part, like a combination of a truncated pyramid with a rectangular cuboid. The second hot pressing blocks 51, 52 are corresponding to each other (such as two hemisphere or curved blocks). The first hot pressing block 50 is mounted into the inner space of the liner 22 and two semicircular second hot pressing blocks 51, 52 are placed outside and pressed toward the first hot pressing block 50 to make two layers, the liner 22 and the spiral paper tube, connect with each other.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. An eco-friendly soft tube packaging comprising:
a body (20) made from biodegradable or recyclable materials by blow molding; the body (20) having a bottle mouth (21), a liner (22) with a hollow cavity and connected to a lower part of the bottle mouth (21), and a joining recess (23) disposed around a periphery of the body (20) and located between the bottle mouth (21) and the liner (22); the bottle mouth (21) being a tubular component and communicating with an inner space of the liner (22) by a hole (211) disposed on one end of the bottle mouth (21);
a cap (10) made from biodegradable or recyclable materials and detachably connected to the bottle mouth (21) to close or open the bottle mouth (21);
a tightening member (30) made from biodegradable or recyclable materials, able to be mounted into the joining recess (23), and having a shape the same as a shape of the joining recess (23);
an outer tube (40) which is a spiral paper tube produced by waterproof paper being wound spirally; the outer tube (40) covering the liner (22) and the joining recess (23) and a head portion of the outer tube (40) fixed in the joining recess (23) of the body (20) by tightening of the tightening member (30); a rear end of the outer tube (40) adhered and connected to a rear end of the liner (22) and the liner (22) is closed.

2. The eco-friendly soft tube packaging as claimed in claim 1, wherein the biodegradable or recyclable material is formed by bamboo powder mixed with plastic capable of being broken down naturally.

3. The eco-friendly soft tube packaging as claimed in claim 2, wherein the plastic capable of being broken down naturally includes polyvinyl alcohol (PVA) and polylactic acid (PLA).

4. The eco-friendly soft tube packaging as claimed in claim 2, wherein the plastic capable of being broken down naturally is selected from the group consisting of starch-based blends, polybutylene adipate terephthalate (PBAT), poly(butylene succinate (PBS), and polyhydroxyalkanoates (PHAs).

5. The eco-friendly soft tube packaging as claimed in claim 1, wherein the tightening member (30) is in a circular form composed of a first tightening unit (31) and a second tightening unit (32).

6. The eco-friendly soft tube packaging as claimed in claim 1, wherein the spiral paper tube is produced by at least two layers of fiber paper and an inner surface of the spiral paper tube is provided with a waterproof layer (41).

7. The eco-friendly soft tube packaging as claimed in claim 6, wherein long fibers of the two layers of the fiber paper extend and intersect each other.

8. The eco-friendly soft tube packaging as claimed in claim 1, wherein an outer surface of the bottle mouth (21) is provided with a second thread (212) and an inner surface of the cap (10) is provided with a first thread (11); the cap (10) and the bottle mouth (21) are detachably connected by the first thread (11) engaged with the second thread (212) to close or open the bottle mouth (21).

9. A method of manufacturing an eco-friendly soft tube packaging comprising the steps of:
producing a cap (10) by biodegradable or recyclable materials;
producing a tightening member (30) using biodegradable or recyclable materials;
producing a bottle preform (M) including a bottle mouth (21), a lower segment (B), and a joining recess (23) by injection molding of biodegradable or recyclable materials; the lower segment (B) connected to a lower part of the bottle mouth (21) and the joining recess (23) located between the bottle mouth (21) and the lower segment (B) and disposed on a periphery of the bottle preform (M); the bottle mouth (21) being a tubular part having a hole (211) at one end thereof; the cap (10) detachably connected to the bottle mouth (21) for closing or opening the bottle mouth (21);
heating the lower segment (B) of the bottle preform (M);
producing a liner (22) by blow molding of the lower segment (B) of the bottle preform (M) and the bottle mouth (21) communicating with an inner space of the liner (22);
using a spiral paper tube to cover the liner (22) and the joining recess (23) and using a tightening member (30) to tighten a head portion of the spiral paper tube to the joining recess (23) of the bottle preform (M);
cutting a bottom of the liner (22) so that an opening is formed on a bottom end of the liner (22) and communicating with the inner space of the liner (22);
adhering an outer surface of the liner (22) close to the bottom end of the liner (22) to an inner surface of the spiral paper tube; and
closing a bottom end of the spiral paper tube and the opening of the liner (22) at the same time after filling materials into the liner (22) through the opening on the bottom end of the liner (22).

10. The method as claimed in claim 9, wherein the biodegradable or recyclable material is formed by bamboo powder mixed with plastic capable of being broken down naturally.

11. The method as claimed in claim 10, wherein the plastic capable of being broken down naturally includes polyvinyl alcohol (PVA) and polylactic acid (PLA).

12. The method as claimed in claim 10, wherein the plastic capable of being broken down naturally is selected from the group consisting of starch-based blends, polybutylene adipate terephthalate (PBAT), poly(butylene succinate (PBS), and polyhydroxyalkanoates (PHAs).

13. The method as claimed in claim 9, wherein the tightening member (30) together with an upper edge of the spiral paper tube is adhered to the joining recess (23) by adhesives, hot-pressing, high frequency welding, or ultrasonic welding; the tightening member (30) is in a circular form composed of a first tightening unit (31) and a second tightening unit (32).

14. The method as claimed in claim 9, wherein the liner (22) is adhered to the inner surface of the spiral paper tube by hot-pressing, high frequency welding, or ultrasonic welding.

15. The method as claimed in claim 9, wherein the bottom end of the spiral paper tube and the opening of the liner (22) are closed simultaneously by hot-pressing, high frequency welding, or ultrasonic welding.
